# EUROPÄISCHE PATENTSCHRIFT

(11) **EP 1 878 280 B1**
(45) Veröffentlichungstag und Bekanntmachung des Hinweises auf die Patenterteilung: **28.07.2010**
(21) Anmeldenummer: 06753167.3
(22) Anmeldetag: 02.05.2006
(51) Int. Cl.: H04W 24/00

(54) **VERFAHREN ZUM VERARBEITEN VON MESSSTEUERUNGSNACHRICHTEN UND MOBILFUNK-KOMMUNIKATIONSENDGERÄT**
METHOD FOR PROCESSING MEASUREMENT CONTROL MESSAGES AND MOBILE RADIOCOMMUNICATIONS TERMINAL
PROCEDE DE TRAITEMENT DE MESSAGES DE CALIBRAGE AUTOMATIQUE ET TERMINAL DE COMMUNICATION RADIOTELEPHONIQUE MOBILE

(30) Priorität: 03.05.2005 DE 102005020637
(43) Veröffentlichungstag der Anmeldung: 16.01.2008
(73) Patentinhaber: Infineon Technologies AG, 85579 Neubiberg (DE)
(72) Erfinder: ECKERT, Michael, 38122 Braunschweig (DE); KEMMER, Bernd, 82223 Eichenau (DE); KOULA, Gerhard, 83024 Rosenheim (DE); WUSCHKE, Martin, 38527 Meine (DE)
(74) Vertreter: Viering, Jentschura & Partner
(86) Internationale Anmeldenummer: PCT/DE2006/000764
(87) Internationale Veröffentlichungsnummer: WO 2006/116987

(56) Entgegenhaltungen:
- WO-A-01/22759
- WO-A-03/098952
- US-A1- 2004 032 845

## Beschreibung

Die Erfindung betrifft ein Verfahren zum Verarbeiten von Messsteuerungsnachrichten sowie ein Mobilfunk-Kommunikationsendgerät.

Im Rahmen eines UMTS-Mobilfunk-Kommunikationssystems (UMTS: Universal Mobile Telecommunications Systems) ist es vorgesehen, dass ein Mobilfunk-Kommunikationsendgerät Messungen ausführt und Informationen über die Messergebnisse an das Mobilfunk-Zugangsnetzwerk übermittelt, um unterschiedliche Funktionen auszuführen bzw. aufrecht zu erhalten (vergleiche 3GPP TS 25.331, Technical Specification, Third Generation Partnership Project; Technical Specification Group Radio Access Network; RRC Protocol Specification (Release 1999)).

In einer Kontroll-Nachricht, welche gemäß UMTS auch als "Measurement Control"-Nachricht bezeichnet wird und im Folgenden auch als Messsteuerungs-Nachricht bezeichnet wird, kann das Mobilfunk-Zugangsnetzwerk (Radio Access Network, RAN) dem Mobilfunk-Kommunikationsendgerät mitteilen, aufgrund welcher Messereignisse bzw. mit welcher Periodizität eine Messbericht-Nachricht (gemäß UMTS als "Measurement Report"-Nachricht bezeichnet) an das Mobilfunk-Zugangsnetzwerk gesendet werden soll und gegebenenfalls, welche Messergebnisse in der Messbericht-Nachricht enthalten sein sollen. Ein Messereignis wird im Folgenden auch als ein "Event" bezeichnet. Bei Auftreten eines solchen Messereignisses bekommt das Mobilfunk-Zugangsnetzwerk dann üblicherweise die Messergebnisse von den Mobilfunk-Kommunikationsendgeräten zugesendet, die es benötigt, um unterschiedliche Funktionen auszuführen bzw. aufrecht zu erhalten, beispielsweise die Beibehaltung der verabredeten Dienstgüte für eine Mobilfunk-Kommunikationsverbindung mit Hilfe eines sogenannten Handovers.

Messergebnisse werden, wie oben beschrieben, von dem Mobilfunk-Kommunikationsendgerät periodisch, d.h. in definierten, vorgegebenen Zeitabständen (das sogenannte "Periodical Reporting") oder beim Eintreten eines bestimmten Ereignisses (das sogenannte "Event Triggered Reporting") an das Mobilfunk-Zugangsnetzwerk übertragen und damit berichtet. Ferner ist eine Kombination aus einem "Event Triggered Reporting" und einem "Periodical Reporting" vorgesehen, bei dem nach Eintreten eines bestimmten Messereignisses eine definierte Anzahl von Messergebnissen zu bestimmten Zeitpunkten in einer Messbericht-Nachricht an das Mobilfunk-Zugangsnetzwerk übermittelt (reported) wird.

Dies betrifft beispielsweise gemäß 3GPP TS 25.331, Technical Specification, Third Generation Partnership Project; Technical Specification Group Radio Access Network; RRC Protocol Specification (Release 1999) die Intra-Frequenz Report Events 1A (ein Primary CPICH (CPICH: Common Pilot Channel) erreicht einen bestimmten Wertebereich) und die Intra-Frequenz Report Events 1C (ein "nicht-aktiver" Primary CPICH wird besser als ein "aktiver" Primary CPICH).

Wenn aufgrund von Messungen die Bedingungen für das Eintreten eines Events erstmalig festgestellt werden, wird gemäß UMTS ein Timer (Zeitglied) gestartet ("Time to Trigger" (TTT)). Wenn beim Ablaufen der Zeit bis zum Auslösen des Ereignisses ("Time to Trigger") die Bedingungen ununterbrochen gegeben waren und immer noch gegeben sind, werden die entsprechenden Mobilfunkzellen in die sogenannte "Cells recently Triggered"-Liste aufgenommen und dies wird mit einer Messbericht-Nachricht an das Mobilfunk-Zugangsnetzwerk berichtet. Die Angabe der Mobilfunkzelle, für die eine Messbericht-Nachricht erstellt und an das Mobilfunk-Zugangsnetzwerk übermittelt worden ist, werden daraufhin in die sogenannte "Cells triggered"-Liste aufgenommen. In dem Fall des "Event Triggered Periodical Reporting" bzw. in dem Fall des "Periodical Reporting" werden Messungen dann zu bestimmten Zeitpunkten, d.h. nach Ablauf je eines "Reporting Intervals" in weiteren Messbericht-Nachrichten an das Mobilfunk-Zugangsnetzwerk reported, d.h. übermittelt.

Wenn ein Messauftrag an ein Mobilfunk-Kommunikationsendgerät aufgrund einer neuen Messsteuerungs-Nachricht (Measurement Control-Nachricht) von dem Mobilfunk-Zugangsnetzwerk modifiziert wird, bevor eine Messbericht-Nachricht für den alten Messauftrag gesendet wurde, kann es passieren, dass sich die Parameter des Messauftrages (d.h. die Event-Beschreibung (Event Description), beispielsweise die Zelleninformation (Cell Information), die Messquantität (Measurement Quantity), die Ereignis-Identifikationsangabe (Event Identity), ändern und/oder neue Mobilfunkzellen zum Messauftrag dazu kommen bzw. existierende Mobilfunkzellen für diesen Messauftrag wegfallen. Dabei kann es dazu kommen, dass die Mobilfunkzellen bzw. Werte, die zu diesem Zeitpunkt schon in der "Cells Recently Triggered" bzw. "Cells Triggered"-Datei gespeichert sind, für das Mobilfunk-Zugangsnetzwerk nicht mehr von Interesse sind, weil sie sich auf die alte Konfiguration des Messauftrages beziehen.

US 2004/0032845 A1 beschreibt ein Verfahren zum Verwalten einer virtuellen Menge von Zellen. Die virtuelle Menge von Zellen wird basierend auf einer Messungs-Steuerungsnachricht aufgebaut.

WO 01/20942 A1 beschreibt ein Kommunikationsendgerät, das einer aktive Menge von Basisstationen auf einer ersten Frequenz verwendet und eine virtuelle aktive Menge von Basisstationen auf einer zweiten Frequenz verwaltet und basierend auf Frequenzmessungen auf die virtuelle aktive Menge umschaltet.

In US 2005/272425 A1 ist eine Vorrichtung in einem Mobil-Kommunikationssystem beschrieben mit einer Steuereinrichtung, die mehrere Zellen in eine Mehrzahl von Mengen kategorisiert, wobei die Mengen verschiedenen Messungen zugeordnet sind.

US 2004/248568 A1 offenbart ein Verfahren, bei dem Parameterwerte, die die Funkverbindung zwischen einem mobilen Endgerät und einem ortsfesten Transceiver beschreiben, gemessen werden und an eine Funknetzwerksteuereinheit in Form von Berichtsnachrichten übermittelt werden. Ferner wird die Bewegungsgeschwindigkeit des mobilen Endgeräts geschätzt und basierend auf dieser Schätzung und den Parameterwerten ein Berichtsmodus für die Berichtsnachrichten ausgewählt.

Der Erfindung liegt das Problem zugrunde, ein Verfahren zum Verarbeiten von Messsteuerungs-Nachrichten sowie ein Mobilfunk-Kommunikationsendgerät anzugeben, wobei die oben beschriebene Problematik auf einfache Weise gelöst wird.

Das Problem wird durch ein Verfahren zum Verarbeiten von Messsteuerungs-Nachrichten gelöst, durchgeführt von einem Mobilfunk-Kommunikationsendgerät sowie durch ein Mobilfunk-Kommunikationsendgerät mit den Merkmalen gemäß den unabhängigen Patentansprüchen gelöst.

Bei einem Verfahren zum Verarbeiten von Messsteuerungs-Nachrichten, durchgeführt von einem Mobilfunk-Kommunikationsendgerät, wird nach dem Empfang einer ersten Messsteuerungs-Nachricht überprüft, beispielsweise fortlaufend oder kontinuierlich, ob für mindestens eine Mobilfunkzelle ein für das Erzeugen einer Messbericht-Nachricht vorgegebenes Kriterium gemäß der ersten Messsteuerungs-Nachricht erfüllt ist. Für den Fall, dass das Kriterium für mindestens eine Mobilfunkzelle erfüllt ist, wird zumindest eine Angabe der Mobilfunkzelle gespeichert. Auf den Empfang einer zweiten Messsteuerungs-Nachricht, mit der für zumindest eine der Mobilfunkzellen eine Messanweisungs-Änderung angewiesen wird, hin wird zumindest eine der gespeicherten Angaben der Mobilfunkzellen gelöscht oder geändert, abhängig von der zweiten Messsteuerungs-Nachricht.

Ein Mobilfunk-Kommunikationsendgerät weist einen Empfänger zum Empfangen von Messsteuerungs-Nachrichten auf sowie eine Prüfeinheit, die derart eingerichtet ist, dass sie nach dem Empfang einer ersten Messsteuerungs-Nachricht überprüft, beispielsweise fortlaufend oder kontinuierlich, ob für mindestens eine Mobilfunkzelle ein für das Erzeugen einer Messbericht-Nachricht vorgegebenes Kriterium gemäß der ersten Messsteuerungs-Nachricht erfüllt ist und dass sie für den Fall, dass das Kriterium für zumindest eine Mobilfunkzelle erfüllt ist, zumindest eine Angabe der Mobilfunkzelle speichert. Ferner weist das Mobilfunk-Kommunikationsendgerät einen Speicher auf zum Speichern der zumindest einen Angabe der Mobilfunkzelle. Ferner ist eine Verarbeitungseinheit vorgesehen, die derart eingerichtet ist, dass sie auf den Empfang einer zweiten Messsteuerungs-Nachricht, mittels der für zumindest eine der Mobilfunkzellen eine Messanweisungs-Änderung angewiesen wird, hin zumindest eine der gespeicherten Angaben der Mobilfunkzellen löscht oder ändert, abhängig von der zweiten Messsteuerungs-Nachricht.

Anschaulich kann ein Aspekt der Erfindung somit beispielsweise bei Einsatz in einem UMTS-Mobilfunk-Kommunikationsnetzwerk in folgender Vorgehensweise gesehen werden, wobei eine erste Measurement Control-Nachricht an das Mobilfunk-Kommunikationsendgerät von dem Mobilfunk-Zugangsnetzwerk übermittelt wird. Die Measurement Control-Nachricht weist Messanweisungen/Berichtsanweisungen auf, d.h. Angaben, welche Parameter das Mobilfunk-Kommunikationsendgerät messen soll und gegebenenfalls in welcher Weise (periodisch und/oder Ereignis-ausgelöst, d.h. beispielsweise Periodical Reporting und/oder Event Triggered Reporting) die Messbericht-Nachricht(en) an das Mobilfunk-Zugangsnetzwerk übermittelt werden soll(en).

Die Parameter des Messauftrages können beispielsweise eine Ereignisbeschreibung (Event Description), die Mobilfunkzelleninformation (Cell Information), die Messquantität (Measurement Quantity) sowie die Ereignis-Identitätsangabe (Event Identity) sein.

Sind die Voraussetzungen zum Eintreten eines Ereignisses erfüllt, so werden Angaben über das Ereignis gespeichert, beispielsweise wird die Mobilfunkzelle in die "Cells Recently Triggered"-Liste ("Cells Recently Triggered"-Datei) eingetragen. Gemäß den Anweisungen aus der ersten Messsteuerungs-Nachricht wird gegebenenfalls eine Messbericht-Nachricht erzeugt beispielsweise mit der Ereignis-Identitätsangabe und gegebenenfalls mit Messwerten als Inhalt, und an das Mobilfunk-Zugangsnetzwerk übermittelt. Dann wird die Mobilfunkzelle in die "Cells Triggered"-Liste ("Cells Triggered"-Datei) eingetragen. Wird eine zweite Measurement Control-Nachricht von dem Mobilfunk-Zugangsnetzwerk an das Mobilfunk-Kommunikationsendgerät übermittelt und sind in der zweiten Measurement Control-Nachricht für eine oder mehrere Mobilfunkzellen Änderungen der Parameter des Messauftrages enthalten und/oder kommen neue Mobilfunkzellen zum Messauftrag dazu bzw. fallen existierende Mobilfunkzellen für diesen Messauftrag weg, so werden von dem Mobilfunk-Zugangsnetzwerk zumindest die durch die Änderungen betroffenen, d.h. für das Mobilfunk-Zugangsnetzwerk nunmehr nicht mehr interessanten Informationen aus der "Cells Recently Triggered"-Liste ("Cells Recently Triggered"-Datei) und/oder aus der "Cells Triggered"-Liste ("Cells Triggered"-Datei) gelöscht oder in vorgebbarer Weise geändert.

Anschaulich wird somit erfindungsgemäß erreicht, dass Angaben, welche über eine Mobilfunkzelle übermittelt und gespeichert wurden, jedoch hinsichtlich des Messauftrages aus der zweiten Measurement Control-Nachricht nicht mehr für das Mobilfunk-Zugangsnetzwerk von Interesse sind, nicht mehr über die Luftschnittstelle übertragen werden müssen, womit eine Reduktion der für die Luftschnittstelle benötigte Bandbreite erreicht ist.

Ferner ist darauf hinzuweisen, dass durch die Erfindung beispielsweise bei Einsatz in einem UMTS-Mobilfunk-Kommunikationsnetzwerk oder einem GSM-Mobilfunk-Kommunikationsnetzwerk für den oben beschriebenen Fall eine Lösung bereitgestellt wird, so dass ein verlässliches Funktionieren und zeitnahes Verhalten des Mobilfunk-Kommunikationsendgerätes bei Veränderung der Messaufträge nach Empfang mehrerer Measurement Control-Nachrichten erreicht wird.

Unter zeitnah ist in diesem Zusammenhang zu verstehen, dass aufgrund des Verfahrens auch Messungen mitberücksichtigt werden, die andauern bzw. bereits durchgeführt wurden und nicht wieder "von Null" angefangen werden muss.

Beispielhafte Ausgestaltungen der Erfindung ergeben sich aus den abhängigen Ansprüchen.

Die Ausgestaltungen der Erfindung betreffen sowohl das Verfahren zum Verarbeiten von Messsteuerungs-Nachrichten als auch das Mobilfunk-Kommunikationsendgerät.

Für den Fall, dass das Kriterium für mindestens eine Mobilfunkzelle erfüllt ist, kann eine Messbericht-Nachricht erzeugt werden und das Mobilfunk-Kommunikationsendgerät kann in einen Messnachricht-Erzeugungs-Zustand für mindestens eine Mobilfunkzelle übergeben, bevor die zweite Messsteuerungs-Nachricht empfangen wird.

Gemäß einer Ausgestaltung der Erfindung ist es vorgesehen, dass zumindest die Angabe der Mobilfunkzelle in einer Mobilfunkzellen-Ausgelöst-Datei, bei UMTS beispielsweise in der "Cells Triggered"-Datei, gespeichert wird.

Ferner kann es vorgesehen sein, dass mehrere Angaben unterschiedlicher Mobilfunkzellen gespeichert werden, jeweils für den Fall, dass für eine jeweilige Mobilfunkzelle ein für diese vorgegebenes Kriterium erfüllt ist.

Ferner ist es gemäß einer Ausgestaltung vorgesehen, nicht nur die jeweils "betroffenen" Angaben der Mobilfunkzellen, bei denen eine Änderung der Messanweisung vorgenommen wurde aufgrund der in der zweiten Messsteuerungs-Nachricht enthaltenen Anweisungen, sondern auf den Empfang der zweiten Messsteuerungs-Nachricht hin alle gespeicherten Angaben der Mobilfunkzellen zu löschen.

Anders ausgedrückt bedeutet diese Ausgestaltung der Erfindung, dass auf den Empfang der zweiten Messsteuerungsnachricht hin die gespeicherten Dateien, beispielsweise die "Cells Recently Triggered"-Datei und/oder die "Cells Triggered"-Datei neu aufgesetzt werden/wird entsprechend den in der zweiten Messsteuerungsnachricht enthaltenen Messaufträgen.

Diese Vorgehensweise ermöglicht ein sehr einfaches und damit kostengünstiges Sicherstellen des Betriebs eines Mobilfunk-Kommunikationsendgeräts in dem oben beschriebenen Szenario.

Gemäß einer anderen Ausgestaltung der Erfindung ist es vorgesehen, dass auf den Empfang der zweiten Messsteuerungsnachricht hin alle gespeicherten Angaben derjenigen Mobilfunkzellen, für die in der zweiten Messsteuerungsnachricht eine Messanweisungs-Änderung angewiesen wurde, gelöscht oder geändert werden.

Gemäß dieser Ausgestaltung wird erreicht, dass noch verwertbare schon gemessene Messwerte nicht "blind" gelöscht werden, sondern nur diejenigen, welche Mobilfunkzellen betreffen, bei denen eine Messauftrags-Änderung vorliegt.

Gemäß noch einer anderen Ausgestaltung der Erfindung wird für die gespeicherten Angaben der Mobilfunkzellen überprüft, ob die dieser zugeordneten, gespeicherten Informationen unter Berücksichtigung der zweiten Messsteuerungsnachricht noch gültig sind. Es werden die gespeicherten Angaben derjenigen Mobilfunkzellen, für die die Informationen nicht mehr gültig sind, gelöscht oder geändert.

Gemäß dieser Ausgestaltung der Erfindung wird noch genauer untersucht, welche schon gemessenen Informationen tatsächlich nicht mehr für das Mobilfunk-Zugangsnetzwerk von Interesse sind und nur diese werden gelöscht oder geändert.

Gemäß einer anderen Ausgestaltung der Erfindung ist es vorgesehen, dass das vorgegebene Kriterium für eine vorgegebene Zeitdauer erfüllt werden muss (beispielsweise "Time to Trigger" (TTT)), bevor die Angabe über die Mobilfunkzelle gespeichert wird.

Das Mobilfunk-Kommunikationsnetzwerk kann ein Mobilfunk-Kommunikationsnetzwerk der dritten oder einer dieser nachfolgenden Generation sein (vierte Generation, fünfte Generation, ...), beispielsweise ein GSM-Mobilfunk-Kommunikationsnetzwerk oder ein UMTS-Mobilfunk-Kommunikationsnetzwerk.

Ausführungsbeispiele der Erfindung sind in den Figuren dargestellt und werden im Folgenden näher erläutert.

Es zeigen
- Figur 1: ein Kommunikationssystem gemäß einem Ausführungsbeispiel der Erfindung;
- Figur 2: eine Darstellung einer Protokollstruktur der UMTS- Luftschnittstelle;
- Figur 3: ein Nachrichtenflussdiagramm, in dem die einzelnen Verfahrensschritte eines Verfahrens und der Nachrichtenaustausch im Rahmen des Verfahrens gemäß einem Ausführungsbeispiel der Erfindung dargestellt sind.

Auch wenn das Verfahren im Folgenden anhand eines UMTS-Kommunikationssystems beschrieben wird, so ist es in einer alternativen Ausführungsform vorgesehen, dieses beispielsweise in einem GSM-Kommunikationsnetzwerk, alternativ in jedem anderen geeigneten Kommunikationsnetzwerk, zu realisieren.

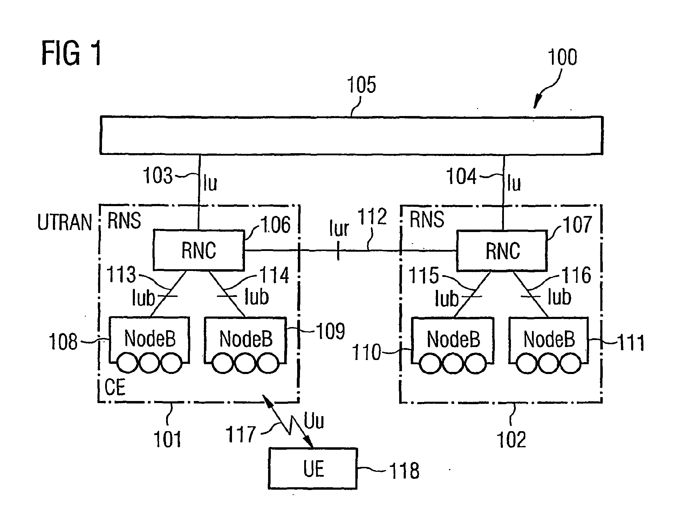

**Fig.1** zeigt ein UMTS-Mobilfunksystem 100, aus Gründen der einfacheren Darstellung insbesondere die Komponenten des UMTS-Mobilfunk-Zugangsnetzwerkes (**U**MTS **T**errestrial **R**adio **A**ccess **N**etwork, UTRAN), welches eine Mehrzahl von Mobilfunk-Netzwerk-Teilsystemen (**R**adio **N**etwork **S**ubsystems, RNS) 101, 102 aufweist, welche jeweils mittels einer sogenannten Iu-Schnittstelle 103, 104 mit dem UMTS-Kernnetzwerk (**C**ore **N**etwork, CN) 105 verbunden sind. Ein Mobilfunk-Netzwerk-Teilsystem 101, 102 weist jeweils eine Mobilfunk-Netzwerk-Kontrolleinheit (**R**adio **N**etwork **C**ontroller, RNC) 106, 107 auf sowie eine oder mehrere UMTS-Basisstationen 108, 109, 110, 111, welche gemäß UMTS auch als NodeB bezeichnet werden.

Innerhalb des Mobilfunk-Zugangsnetzwerkes sind die Mobilfunk-Netzwerk-Kontrolleinheiten 106, 107 der einzelnen Mobilfunk-Netzwerk-Teilsysteme 101, 102 mittels einer sogenannten Iur-Schnittstelle 112 miteinander verbunden. Jede Mobilfunk-Netzwerk-Kontrolleinheit 106, 107 überwacht jeweils die Zuordnung von Mobilfunk-Ressourcen aller Mobilfunkzellen in einem Mobilfunk-Netzwerk-Teilsystem 101, 102.

Eine UMTS-Basisstation 108, 109, 110, 111 ist jeweils mittels einer sogenannten Iub-Schnittstelle 113, 114, 115, 116 mit einer der Basisstation zugeordneten Mobilfunk-Netzwerk-Kontrolleinheit 106, 107 verbunden.

Jede UMTS-Basisstation 108, 109, 110, 111 spannt anschaulich funktechnisch eine oder mehrere Mobilfunkzellen (CE) innerhalb eines Mobilfunk-Netzwerk-Teilsystems 101, 102 auf. Zwischen einer jeweiligen UMTS-Basisstation 108, 109, 110, 111 und einem Teilnehmergerät 118 (User Equipment, UE), im Folgenden auch bezeichnet als Mobilfunk-Kommunikationsendgerät, in einer Mobilfunkzelle werden Nachrichtensignale bzw. Datensignale mittels einer Luftschnittstelle, gemäß UMTS bezeichnet als Uu-Luftschnittstelle 117, vorzugsweise gemäß einem Vielfachzugriff-Übertragungsverfahren übertragen.

Beispielsweise wird gemäß dem UMTS-FDD-Modus (**F**requency **D**ivision **D**uplex) eine getrennte Signalübertragung in Uplink- und Downlink-Richtung (Uplink: Signalübertragung vom Mobilfunk-Kommunikationsendgerät 118 zur jeweiligen UMTS-Basisstation 108, 109, 110, 111; Downlink: Signalübertragung von.der jeweiligen zugeordneten UMTS-Basisstation 108, 109, 110, 111 zu dem Mobilfunk-Kommunikationsendgerät 118) durch eine entsprechende separate Zuweisung von Frequenzen oder Frequenzbereichen erreicht.

Mehrere Teilnehmer, anders ausgedrückt mehrere aktivierte oder in dem Mobilfunk-Zugangsnetzwerk angemeldete Mobilfunk-Kommunikationsendgeräte 118 in derselben Mobilfunkzelle werden vorzugsweise mittels orthogonaler Codes, insbesondere gemäß dem sogenannten CDMA-Verfahren (**C**ode **D**ivision **M**ultiple **A**ccess) voneinander signaltechnisch getrennt.

In diesem Zusammenhang ist anzumerken, dass in Fig.1 aus Gründen der einfachen Darstellung nur ein Mobilfunk-Kommunikationsendgerät 118 dargestellt ist. Allgemein sind jedoch eine beliebige Anzahl von Mobilfunk-Kommunikationsendgeräten 118 in dem Mobilfunksystem 100 vorgesehen.

Die Kommunikation eines Mobilfunk-Kommunikationsendgeräts 118 mit einem anderen Kommunikationsgerät kann mittels einer vollständigen Mobilfunk-Kommunikationsverbindung zu einem anderen Mobilfunk-Kommunikationsendgerät aufgebaut sein, alternativ zu einem Festnetz-Kommunikationsgerät.

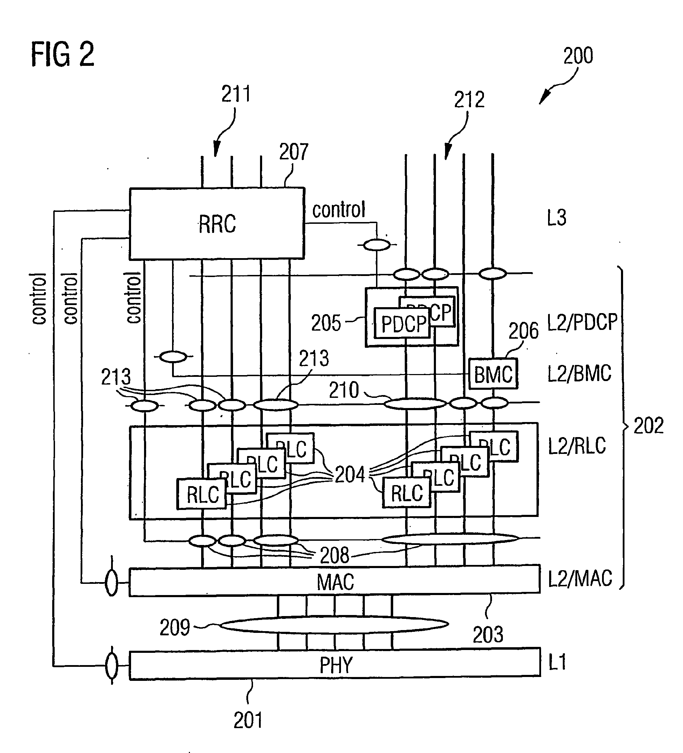

Wie in **Fig.2** dargestellt ist, ist die UMTS-Luftschnittstelle 117 logisch in drei Protokollschichten gegliedert (in Fig.2 symbolisiert durch eine Protokollschichtanordnung 200). Die die Funktionalität der jeweiligen im Folgenden beschriebenen Protokollschichten gewährleistenden und realisierenden Einheiten (Entitäten) sind sowohl in dem Mobilfunk-Kommunikationsendgerät 118 als auch in der UMTS-Basisstation 108, 109, 110, 111 bzw. in der jeweiligen Mobilfunk-Netzwerk-Kontrolleinheit 106, 107, implementiert.

In Fig.2 ist die Protokollstruktur 200 aus Sicht des dedizierten Transportkanals DCH (Dedicated Channel) dargestellt.

Die in Fig.2 dargestellte unterste Schicht ist die physikalische Schicht PHY 201, welche gemäß dem OSI-Referenzmodell (Open System Interconnection) gemäß ISO (International Standardisation Organisation) die Protokollschicht 1 darstellt.

Die über der physikalischen Schicht 201 angeordnete Protokollschicht ist die Datensicherungsschicht 202, gemäß OSI-Referenzmodell Protokollschicht 2, welche ihrerseits mehrere Teil-Protokollschichten aufweist, nämlich die **M**edium **A**ccess **C**ontrol-Protokollschicht (MAC-Protokollschicht) 203, die **R**adio **L**ink **C**ontrol-Protokollschicht 204 (RLC-Protokollschicht), die **P**acket **D**ata **C**onvergence **P**rotocol-Protokollschicht 205 (PDCP-Protokollschicht), sowie die **B**roadcast/**M**ulticast **C**ontrol-Protokollschicht 206 (BMC-Protokollschicht).

Die oberste Schicht der UMTS-Luftschnittstelle Uu ist die Mobilfunk-Netzwerkschicht (gemäß OSI-Referenzmodell Protokollschicht 3), aufweisend die Mobilfunk-Ressourcen-Kontrolleinheit 207 (**R**adio **R**esource **C**ontrol-Protokollschicht, RRC-Protokollschicht).

Jede Protokollschicht 201, 202, 203, 204, 205, 206, 207 bietet der über ihr liegenden Protokollschicht ihre Dienste über vorgegebene, definierte Dienstzugangspunkte (Service Access Points) an.

Die Dienstzugangspunkte werden zum besseren Verständnis der Protokoll schicht-Architektur mit allgemein Gebräuchlichen und eindeutigen Namen versehen, wie beispielsweise logische Kanäle 208 zwischen der MAC-Protokollschicht 203 und der RLC-Protokollschicht 204, Transportkanäle 209 zwischen der physikalischen Schicht 201 und der MAC-Protokollschicht 203, Radio Bearer (RB) 210 zwischen der RLC-Protokollschicht 204 und der PDCP-Protokollschicht 205 bzw. der BMC-Protokollschicht 206, sowie Signalling Radio Bearer (SRB) 213 zwischen der RLC-Protokollschicht 204 und der RRC-Protokollschicht 207.

Die in Fig.2 dargestellte Protokollstruktur 200 ist gemäß UMTS nicht nur horizontal in die oben beschriebenen Protokollschichten und Einheiten der jeweiligen Protokollschichten aufgeteilt, sondern auch vertikal in eine sogenannte Kontroll-Protokollebene 211 (**C**ontrol-Plane, C-Plane), welche Teile der physikalischen Schicht 201, Teile der MAC-Protokollschicht 203, Teile der RLC-Protokollschicht 204 sowie die RRC-Protokollschicht 207 enthält und die Nutzer-Protokollebene 212 (**U**ser-Plane, U-Plane), welche Teile der physikalischen Schicht 201, Teile der MAC-Protokollschicht 203, Teile der RLC-Protokollschicht 204, die PDCP-Protokollschicht 205 sowie die BMC-Protokollschicht 206 enthält.

Mittels der Einheiten der Kontroll-Protokollebene 211 werden ausschließlich Kontroll-Daten übertragen, die zum Aufbau und zum Abbau sowie zur Aufrechterhaltung einer Kommunikationsverbindung benötigt werden, wohingegen mittels der Einheiten der Nutzer-Ebene 212 die eigentlichen Nutzdaten transportiert werden.

Jede Protokollschicht bzw. jede Einheit (Entität) einer jeweiligen Protokollschicht hat bestimmte vorgegebene Funktionen im Rahmen einer Mobilfunk-Kommunikation.

Senderseitig ist die Aufgabe der physikalischen Schicht 201 bzw. der Einheiten der physikalischen Schicht 201, die sichere Übertragung von von der MAC-Protokollschicht 203 kommenden Daten über die Luftschnittstelle 117 zu gewährleisten. Die Daten werden in diesem Zusammenhang auf physikalische Kanäle (nicht dargestellt in Fig.2) abgebildet. Die physikalische Schicht 201 bietet ihre Dienste der MAC-Protokollschicht 203 über Transportkanäle 209 an, mittels derer festgelegt wird, wie und mit welcher Charakteristik die Daten über die Luftschnittstelle 117 transportiert werden sollen. Die wesentlichen Funktionen, welche von den Einheiten der physikalischen Schicht 201 bereitgestellt werden, beinhalten die Kanalcodierung, die Modulation und die CDMA-Code-Spreizung. In entsprechender Weise führt die physikalische Schicht 201 bzw. die Entitäten der physikalischen Schicht 201 auf der Empfängerseite die CDMA-Code-Entspreizung, die Demodulation und die Decodierung der empfangenen Daten durch und gibt diese dann an die MAC-Protokollschicht 203 zur weiteren Verarbeitung weiter.

Die MAC-Protokollschicht 203 bzw. die Einheiten der MAC-Protokollschicht 203 bietet bzw. bieten ihre Dienste der RLC-Protokollschicht 204 mittels logischer Kanäle 208 als Dienstzugangspunkte an, mittels derer charakterisiert wird, um welchen Dateityp es sich bei den transportierten Daten handelt. Die Aufgabe der MAC-Protokollschicht 203 in dem Sender, d.h. bei Datenübertragung in Uplink-Richtung in dem Mobilfunk-Kommunikationsendgerät 118, liegt insbesondere darin, die Daten, die an einem logischen Kanal 208 oberhalb der MAC-Protokollschicht 203 anliegen, auf die Transportkanäle 209 der physikalischen Schicht 201 abzubilden. Die physikalische Schicht 201 bietet den Transportkanälen 209 hierzu diskrete Übertragungsraten an. Daher ist es eine wichtige Funktion der MAC-Protokollschicht 203 bzw. der Entitäten der MAC-Protokollschicht 203 in dem Mobilfunk-Kommunikationsendgerät 118 im Sendefall die Auswahl eines geeigneten Transportformates (TF) für jeden konfigurierten Transportkanal in Abhängigkeit von der jeweils aktuellen Datenübertragungsrate und der jeweiligen Datenpriorität der logischen Kanäle 208, die auf den jeweiligen Transportkanal 209 abgebildet sind, sowie der verfügbaren Sendeleistung des Mobilfunk-Kommunikationsendgeräts 118 (UE). In einem Transportformat ist unter anderem festgelegt, wie viele MAC-Datenpaketeinheiten, bezeichnet als Transportblock, pro Übertragungszeitlänge TTI (**T**ransmission **T**ime **I**nterval) über den Transportkanal 209 an die physikalische Schicht 201 gesendet, anders ausgedrückt, übergeben werden. Die zulässigen Transportformate sowie die zulässigen Kombinationen von Transportformaten der verschiedenen Transportkanäle 209 werden dem Mobilfunk-Kommunikationsendgerät 118 von der Mobilfunk-Netzwerk-Kontrolleinheit 106, 107 bei dem Aufbau einer Kommunikationsverbindung signalisiert. In dem Empfänger wird von den Einheiten der MAC-Protokollschicht 203 die auf den Transportkanälen 209 empfangenen Transportblöcke wieder auf die logischen Kanäle 208 aufgeteilt.

Die MAC-Protokollschicht bzw. die Einheiten der MAC-Protokollschicht 203 weist bzw. weisen üblicherweise drei logische Einheiten auf. Die sogenannte MAC-d-Einheit (MAC-Dedicated-Einheit) behandelt die Nutzdaten und die Kontrolldaten, die über die entsprechenden dedizierten logischen Kanäle DTCH (**D**edicated **T**raffic **C**hannel) und DCCH (**D**edicated **C**ontrol **C**hannel) auf die dedizierten Transportkanäle DCH (**D**edicated **C**hannel) abgebildet werden. Die MAC-c/sh-Einheit (MAC-Control/Shared-Einheit) behandelt die Nutzdaten und die Kontrolldaten von logischen Kanälen 208, die auf die gemeinsamen Transportkanäle 209, wie beispielsweise der dem gemeinsamen Transportkanal RACH (**R**andom **A**ccess **C**hannel) in Uplink-Richtung oder dem gemeinsamen Transportkanals FACH (**F**orward **A**ccess **C**hannel) in Downlink-Richtung abgebildet werden. Die MAC-b-Einheit (MAC-Broadcast-Einheit) behandelt nur die Mobilfunkzellenrelevanten Systeminformationen, die über den logischen Kanal BCCH (**B**roadcast **C**ontrol **C**hannel) auf den Transportkanal BCH (**B**roadcast **C**hannel) abgebildet und per Broadcast zu allen Mobilfunk-Kommunikationsendgeräten 118 in der jeweiligen Mobilfunkzelle übertragen werden.

Mittels der RLC-Protokollschicht 204 bzw. mittels der Einheiten der RLC-Protokollschicht 204 werden der RRC-Protokollschicht 207 ihre Dienste mittels Signalling Radio Bearer (SRB) 213 als Dienstzugangspunkte und der PDCP-Protokollschicht 205 und der BMC-Protokollschicht 206 mittels Radio Bearer (RB) 210 als Dienstzugangspunkte angeboten. Die Signalling Radio Bearer und die Radio Bearer charakterisieren, wie die RLC-Protokollschicht 204 mit den Datenpaketen umzugehen hat. Hierzu wird beispielsweise von der RRC-Protokollschicht 207 der Übertragungsmodus für jeden konfigurierten Signalling Radio Bearer bzw. Radio Bearer festgelegt. Es sind gemäß UMTS folgende Übertragungsmodi vorgesehen:
- Transparent Mode (TM),
- Unacknowledged Mode (UM), oder
- Acknowledged Mode (AM).

Die RLC-Protokollschicht 204 ist so modelliert, dass es eine eigenständige RLC-Entität pro Radio Bearer bzw. Signalling Radio Bearer gibt. Des Weiteren ist die Aufgabe der RLC-Protokollschicht bzw. ihrer Entitäten 204 in der Sendeeinrichtung, die Nutzdaten und die Signalisierungsdaten von Radio Bearern bzw. Signalling Radio Bearern in Datenpakete aufzuteilen oder zusammenzufügen. Die RLC-Protokollschicht 204 übergibt die nach der Teilung oder dem Zusammenfügen entstandenen Datenpakete an die MAC-Protokollschicht 203 zum weiteren Transport bzw. zur weiteren Verarbeitung.

Weiterhin wird auf RLC-Protokollschichtebene ein Übertragungssicherungsverfahren angewendet, um eine möglichst fehlerfreie Datenübertragung sicherzustellen. Dies ist jedoch lediglich in dem Übertragungsmodus Acknowledged Mode vorgesehen, d.h. bei einer Datenübertragung per Empfangsbestätigung. Hierzu werden die RLC-Protokolldateneinheiten im Sender durchnummeriert und so lange in einem RLC-Pufferspeicher zwischengespeichert, bis von dem Empfänger entsprechende Bestätigungen über den fehlerfreien Empfang der jeweiligen Protokolldateneinheit(en) signalisiert wird. Wird keine Bestätigung über den fehlerfreien Empfang seitens des Senders empfangen, so werden die fehlerhaften empfangenen Datenpakete wiederholt gesendet. Im Empfänger werden Übertragungsfehler anhand der Lücken in der Sequenznummernfolge, die, wie oben beschrieben wurde, den RLC-Protokolldateneinheiten zugeordnet sind, erkannt. Der Empfänger signalisiert dem Sender den fehlerfreien bzw. den fehlerhaften Empfang der Datenpakete anhand sogenannter Status-Protokolldateneinheiten, d.h. dem RLC-spezifischen Kontroll-Dateneinheiten. Für die Übertragung der RLC-Status-Protokolldateneinheiten sind, zwei Möglichkeiten vorgesehen. Zum einen ist eine separate Kontrolldateneinheit vorgesehen und zum anderen ein "piggybacked" ("Huckepack") mit den Nutzdaten, d.h. eingepackt in einem Nutzdaten-Protokolldatenpaket, d.h. in einer Nutzdaten-Protokolldateneinheit.

Des Weiteren ist in diesem Zusammenhang anzumerken, dass die Übertragung dieser RLC-Kontrollinformation üblicherweise höhere Priorität gegenüber den Nutzdatenpaketen hat.

Die PDCP-Protokollschicht 205 bzw. die Einheiten der PDCP-Protokollschicht 205 ist bzw. sind eingerichtet für die Übertragung bzw. für den Empfang von Daten der sogenannten Packet-Switched-Domain (Paketvermittelnde Domäne, PS-Domain). Die Hauptfunktion der PDCP-Protokollschicht 205 ist die Komprimierung bzw. Dekomprimierung der IP-Header-Informationen (Internet Protocol-Header-Informationen).

Die BMC-Protokollschicht 206 bzw. deren Entitäten wird bzw. werden verwendet, um über die Luftschnittstelle sogenannte Zell-Broadcast-Nachrichten zu übertragen bzw. zu empfangen. Die RRC-Protokollschicht 207 bzw. die Entitäten der RRC-Protokollschicht 207 ist bzw. sind für den Aufbau und den Abbau und die Umkonfiguration von physikalischen Kanälen, Transportkanälen 209, logischen Kanälen 208, Signalling Radio Bearers 213 und Radio Bearers 210 sowie für das Aushandeln aller Parameter der Protokollschicht 1, d.h. der physikalischen Schicht 201 und der Protokollschicht 2, verantwortlich. Hierzu tauschen die RRC-Einheiten, d.h. die Einheiten der RRC-Protokollschicht 207 in der Mobilfunk-Netzwerk-Kontrolleinheit 106, 107 und das jeweilige Mobilfunk-Kommunikationsendgerät 118 über die Signalling Radio Bearers 213 entsprechende RRC-Nachrichten aus. Details zur RRC-Schicht sind in 3GPP TS 25.331, Technical Specification, Third Generation Partnership Project; Technical Specification Group Radio Access Network; RRC Protocol Specification (Release 1999) beschrieben.

Wie oben beschrieben wurde kann das Mobilfunk-Kommunikationsendgerät 118 der ihm zugeordneten Mobilfunk-Netzwerk-Kontrolleinheit 106, 107 auf RRC-Ebene Informationen (die sogenannten Measurement Report-Nachrichten) über das Datenverkehrsaufkommen eines Transportkanals zum Zweck des Managements der Mobilfunk-Ressourcen mitteilen.

Mit Hilfe dieser Informationen kann die Serving Mobilfunk-Netzwerk-Kontrolleinheit 106, 107 daraufhin entsprechende Konfigurationen des Mobilfunk-Kommunikationsendgerätes 118 vornehmen, um beispielsweise die nutzbaren Transportformate eines Mobilfunk-Kommunikationsendgeräts 118 einzuschränken bzw. zu erhöhen oder ein Handover zu einer anderen Mobilfunkzelle, eine Rekonfiguration der dedizierten physikalischen Kanäle oder einen RRC-Zustandswechsel von einem ersten Zustand CELL_DCH in einen zweiten Zustand CELL_FACH durchzuführen.

Im Folgenden wird ein Verfahren näher beschrieben zur Modifikation von Messaufträgen in dem Mobilfunk-Kommunikationssystem UMTS für den Fall, dass ein Messauftrag durch eine Messsteuerungs-Nachricht (Measurement Control- Nachricht) von dem Mobilfunk-Zugangsnetzwerk (**R**adio **A**ccess **N**etwork, RAN) geändert wird, wenn bereits Werte entsprechend dem alten Messauftrag gemäß einer vorangegangenen Messsteuerungs-Nachricht in der "Cells Recently Triggered" bzw. "Cells Triggered" stehen bzw. in den jeweiligen Dateien gespeichert sind und noch keine Messbericht-Nachricht (Measurement Report) für den alten Messauftrag an das Mobilfunk-Zugangsnetzwerk gesendet wurde, oder nach erfolgtem Senden einer Messbericht-Nachricht noch weitere Messbericht-Nachrichten gesendet werden sollen.

Gemäß einer ersten Variante wird die "Cells Recently Triggered"-Datei bzw. "Cells-Triggered"-Datei in dem Mobilfunk-Kommunikationsendgerät 118 nach dem Empfang einer "Measurement Control"-Nachricht von dem Mobilfunk-Zugangsnetzwerk, die die Parameter des Messauftrages (Event Description) ändert und/oder neue Mobilfunkzellen zum Messauftrag hinzufügt bzw. existierende Mobilfunkzellen von diesem Messauftrag entfernt, vollständig gelöscht, da sich die Bedingung des Messauftrages dadurch vollständig ändern können und die Mobilfunkzellen bzw. Werte, die zu diesem Zeitpunkt schon in der "Cells Recently Triggered"-Datei bzw. in der "Cells Triggered"-Datei stehen, d.h. darin gespeichert sind, eventuell nicht mehr für das Mobilfunk-Zugangsnetzwerk von Interesse sind, weil sie sich auf die Konfiguration des alten Messauftrages gemäß der ursprünglichen Messsteuerungs-Nachricht beziehen.

Ferner wird gemäß diesem Ausführungsbeispiel der Erfindung der Timer "Time to Trigger" (TTT) zurückgesetzt. Der Timer wird gestartet, wenn aufgrund von Messungen die Bedingungen für das Eintreten eines Events erstmalig festgestellt werden. Wenn beim Ablaufen der "Time to Trigger" diese Bedingungen bis dahin ununterbrochen gegeben waren und immer noch gegeben sind, werden die entsprechenden Mobilfunkzellen in die "Cells Recently Triggered"-Datei aufgenommen und dies wird mit einer Messbericht-Nachricht an das Mobilfunk-Zugangsnetzwerk berichtet. Die Mobilfunkzellen werden daraufhin in die "Cells Triggered"-Datei aufgenommen. In dem Fall von Event Triggered Periodical Reporting bzw. Periodical Reporting werden zu bestimmten Zeitpunkten, d.h. nach Ablauf jeweils eines vorgegebenen Zeitintervalls (auch bezeichnet als "Reporting Intervall weitere Messbericht-Nachrichten an das Mobilfunk-Zugangsnetzwerk übermittelt.

In einer zweiten Ausführungsform der Erfindung wird die "Cells Recently Triggered"-Datei bzw. die "Cells Triggered"-Datei in dem Mobilfunk-Kommunikationsendgerät 118 derart modifiziert, dass die Mobilfunkzellen, die aufgrund der jeweils aktuelleren Messsteuerungs-Nachricht von dem Mobilfunk-Zugangsnetzwerk aus dem Messauftrag gelöscht wurden, oder die Mobilfunkzellen, deren Parameter (Event Description) sich aufgrund der aktuelleren Messsteuerungs-Nachricht ändern, aus der bestehenden "Cells Recently Triggered"-Datei bzw. "Cells Triggered"-Datei gelöscht werden oder geändert werden. Die anderen Mobilfunkzellen, welche in der "Cells Recently Triggered"-Datei bzw. in der "Cells Triggered"-Datei gespeichert sind, bleiben gemäß dieser Ausführungsform der Erfindung unverändert.

Gemäß einer dritten Ausgestaltung der Erfindung werden alle Mobilfunkzellen, welche in der "Cells Recently Triggered"-Datei bzw. in der "Cells Triggered"-Datei in dem Mobilfunk-Kommunikationsendgerät 118 nach dem Empfang einer aktuellen Messsteuerungs-Nachricht von dem Mobilfunk-Zugangsnetzwerk daraufhin kontrolliert, ob die Information noch gültig ist. Es werden daraufhin nur die Mobilfunkzellen aus der "Cells Recently Triggered"-Datei bzw. aus der "Cells Triggered"-Datei gelöscht, die aus dem Messauftrag gelöscht wurden, oder die Mobilfunkzellen, die aufgrund der neuen Parameter (Event Description) nicht mehr in der "Cells Recently Triggered"-Datei bzw. in der "Cells Triggered"-Datei stehen dürfen. Die anderen Mobilfunkzellen, welche in der "Cells Recently Triggered"-Datei bzw. in der "Cells Triggered"-Datei eingetragen sind, bleiben auch gemäß dieser Ausgestaltung der Erfindung unberührt.

Anschaulich wird mit den oben beschriebenen Verfahren ein spezifiziertes Mobilfunk-Kommunikationsendgerät-Verhalten für den Fall angegeben, dass ein noch nicht von dem jeweiligen Mobilfunk-Kommunikationsendgerät abgearbeiteter Messauftrag modifiziert wird, beispielsweise mittels einer aktuelleren Messsteuerungs-Nachricht.

Ohne die oben beschriebene Verfahren ist das Mobilfunk-Kommunikationsendgerät-Verhalten beispielsweise gemäß UMTS oder gemäß GSM unspezifiziert, was zu Fehlern bei der Signalisierung und der Datenübertragung zwischen dem Mobilfunk-Kommunikationsendgerät und dem Mobilfunk-Zugangsnetzwerk führen kann und sogar zu einem Verlust der Mobilfunk-Kommunikationsverbindung.

Somit wird anschaulich eine neue Funktionalität eines UMTS-Mobilfunk-Kommunikationsendgerätes bzw. eines GSM-Mobilfunk-Kommunikationsendgerätes zur Abarbeitung und Modifikation von Messaufträgen angegeben.

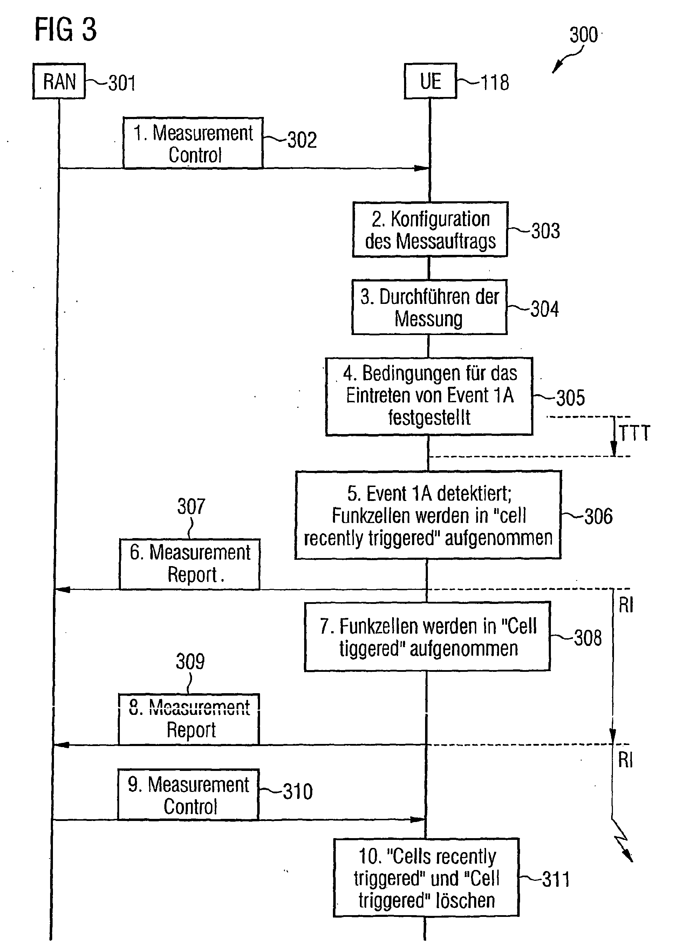

**Fig.3** zeigt in einem Nachrichtenflussdiagramm 300 eine der oben beschriebenen Varianten der Erfindung im Detail.

Von einem Mobilfunk-Zugangsnetzwerk 301, gemäß UMTS eingerichtet als UTRAN (UMTS **T**errestrial **R**adio **A**ccess **N**etwork) wird an das Mobilfunk-Kommunikationsendgerät 118 eine erste Messsteuerungs-Nachricht 302 übertragen. Mittels der ersten Messsteuerungs-Nachricht (erste Measurement Control-Nachricht) 302 wird das Mobilfunk-Kommunikationsendgerät 118 für einen Messauftrag "Intra-Frequenzmessung" konfiguriert.

Nach Empfang der ersten Messsteuerungs-Nachricht 302 in dem Mobilfunk-Kommunikationsendgerät 118 wird von diesem der in der ersten Messsteuerungs-Nachricht 302 enthaltene Messauftrag konfiguriert (Schritt 303).

Anschließend führt das Mobilfunk-Kommunikationsendgerät 118 die Messungen gemäß dem Messauftrag der in der ersten Messsteuerungs-Nachricht 302 enthaltenen Messanweisungen aus, gemäß diesem Ausführungsbeispiel der Erfindung die angeforderten Intra-Frequenzmessungen (Schritt 304).

Im Folgenden wird angenommen, dass aufgrund entsprechender ermittelter Messwerte in dem Mobilfunk-Kommunikationsendgerät 118 für eine oder mehreren Mobilfunkzellen die Bedingungen für das Eintreten des "Event 1A" festgestellt werden. Somit wird der Timer "Time to Trigger" (TTT) für dieses jeweilige Messereignis gestartet (Schritt 305).

Nach Ablauf des Timers, d.h. nach Ablauf des durch den Parameter "Time to Trigger" (TTT) angegeben Zeitintervalls, und für den Fall, dass bei Ablauf des Zeitintervalls die angegebenen Bedingungen ununterbrochen gegeben waren und immer noch gegeben sind, gilt das "Event 1A" als eingetreten. Die entsprechenden Mobilfunkzellen werden in die "Cells Recently Triggered"-Datei des Mobilfunk-Kommunikationsendgerätes 118 aufgenommen (Schritt 306).

Nachfolgend erzeugt und sendet das Mobilfunk-Kommunikationsendgerät 118 eine erste Messbericht-Nachricht 307 an das Mobilfunk-Zugangsnetzwerk 301 wobei in der ersten Messbericht-Nachricht 307 zumindest die Angabe der Mobilfunkzellen, für die das jeweilige Ereignis gemäß dem Messauftrag eingetreten ist, enthalten ist. Ferner ist optional vorgesehen, zusätzlich für jedes Ereignis eine zugehörige Ereignis-Identifikationsangabe (Event ID) sowie optional noch die ermittelten Messwerte oder einen Teil der ermittelten Messwerte in der "Cells Recently Triggered"-Datei bzw. in der "Cells Triggered"-Datei zu speichern und gegebenenfalls auch in der oder in den Messbericht-Nachrichten an das Mobilfunk-Zugangsnetzwerk zu übermitteln.

Nach Senden der Messbericht-Nachricht 307 werden die entsprechenden Mobilfunkzellen in die "Cells Triggered"-Datei aufgenommen (Schritt 308).

Zu bestimmten Zeitpunkten, d.h. nach Ablauf je eines vorgegebenen Zeitintervalls (auch bezeichnet als "Reporting Interval") werden weitere Messbericht-Nachrichten, gemäß diesem Ausführungsbeispiel nach Ablauf eines Zeitintervalls RI, beispielsweise eine zweite Messbericht-Nachricht 309 von dem Mobilfunk-Kommunikationsendgerät 118 erzeugt und an das Mobilfunk-Zugangsnetzwerk 301 übermittelt. Von dem Mobilfunk-Zugangsnetzwerk 301 wird eine zweite Messsteuerungs-Nachricht 310 erzeugt und an das Mobilfunk-Kommunikationsendgerät 118 übermittelt. Mittels der zweiten Messsteuerungs-Nachricht (Measurement Control-Nachricht) 310 wird von dem Mobilfunk-Zugangsnetzwerk 301 der Messauftrag für das Mobilfunk-Kommunikationsendgerät 118 geändert.

Gemäß diesem Ausführungsbeispiel der Erfindung wird angenommen, dass die Parameter "Time to Trigger" und die "Cell Information" geändert werden. Es sei ferner angenommen, dass aufgrund dieser Änderungen die Informationen in der "Cells Recently Triggered"-Datei und in der "Cells Triggered"-Datei zumindest teilweise veraltet und nicht mehr von Interesse für das Mobilfunk-Zugangsnetzwerk 301 sind.

Aus diesem Grund wird/werden auf den Empfang der zweiten Messsteuerungs-Nachricht 310 hin und nach erfolgter Prüfung, dass die Angaben der Mobilfunkzelle in der "Cells Recently Triggered"-Datei und/oder "Cells Triggered"-Datei für das Mobilfunk-Zugangsnetzkwerk 301 nicht mehr von Interesse sind, von dem Mobilfunk-Kommunikationsendgerät 118 die "Cells Recently Triggered" und/oder "Cells Triggered"-Datei gelöscht (Schritt 311).

### Bezugszeichenliste

- 100: Mobilfunksystem
- 101: Mobilfunk-Netzwerk-Teilsystem
- 102: Mobilfunk-Netzwerk-Teilsystem
- 103: Iu-Schnittstelle
- 104: Iu-Schnittstelle
- 105: Mobilfunk-Kernnetzwerk
- 106: Mobilfunk-Netzwerk-Kontrolleinheit
- 107: Mobilfunk-Netzwerk-Kontrolleinheit
- 108: UMTS-Basisstation
- 109: UMTS-Basisstation
- 110: UMTS-Basisstation
- 111: UMTS-Basisstation
- 112: Iur-Schnittstelle
- 113: Iub-Schnittstelle
- 114: Iub-Schnittstelle
- 115: Iub-Schnittstelle
- 116: Iub-Schnittstelle
- 117: Uu-Schnittstelle
- 118: Mobilfunk-Endgerät
- 200: Protokollschicht-Anordnung
- 201: physikalische Schicht
- 202: Datenverbindungsschicht
- 203: MAC-Protokollschicht
- 204: RLC-Protokollschicht
- 205: PDCP-Protokollschicht
- 206: BMC-Protokollschicht
- 207: RRC-Protokollschicht
- 208: logischer Kanal
- 209: Transportkanal
- 210: Radio Bearer
- 211: Kontroll-Ebene
- 212: Nutzer-Ebene
- 213: Signalling Radio Bearer

- 300: Nachrichtenflussdiagramm
- 301: Mobilfunk-Zugangsnetzwerk
- 302: erste Messsteuerungs-Nachricht
- 303: Verfahrensschritt
- 304: Verfahrensschritt
- 305: Verfahrensschritt
- 306: Verfahrensschritt
- 307: erste Messbericht-Nachricht
- 308: Verfahrensschritt
- 309: zweite Messbericht-Nachricht
- 310: zweite Messsteuerungs-Nachricht
- 311: Verfahrensschritt

## Patentansprüche

1. Verfahren zum Verarbeiten von Messsteuerungsnachrichten (302, 310), durchgeführt von einem Mobilfunk-Kommunikationsendgerät (118),
• bei dem nach dem Empfang einer ersten
Messsteuerungsnachricht (302) überprüft wird, ob für mindestens eine Mobilfunkzelle ein für das Erzeugen einer Messbericht-Nachricht (307, 309) vorgegebenes Kriterium gemäß der ersten Messsteuerungsnachricht (302) erfüllt ist,
• bei dem für den Fall, dass das Kriterium für mindestens eine Mobilfunkzelle erfüllt ist, zumindest eine Angabe der Mobilfunkzelle gespeichert wird,
• bei dem auf den Empfang einer zweiten
Messsteuerungsnachricht (310) hin, mittels der für zumindest eine der Mobilfunkzellen eine Messanweisungs-Änderung angewiesen wird, zumindest eine der
gespeicherten Angaben der Mobilfunkzellen gelöscht oder geändert wird abhängig von der zweiten Messsteuerungsnachricht (310).

2. Verfahren gemäß Anspruch 1,
bei dem für den Fall, dass das Kriterium für mindestens eine Mobilfunkzelle erfüllt ist, eine Messbericht-Nachricht (307, 309) erzeugt wird und das Mobilfunk-Kommunikationsendgerät (118) übergeht in einen Messnachricht-Erzeugung-Zustand für mindestens eine Mobilfunkzelle.

3. Verfahren gemäß Anspruch 1 oder 2,
bei dem die Angabe der Mobilfunkzelle in einer Mobilfunkzellen-Ausgelöst-Datei gespeichert wird.

4. Verfahren gemäß einem der Ansprüche 1 bis 3,
bei dem mehrere Angaben unterschiedlicher Mobilfunkzellen gespeichert werden, jeweils für den Fall, dass für eine jeweilige Mobilfunkzelle ein für diese vorgegebenes Kriterium erfüllt ist.

5. Verfahren gemäß einem der Ansprüche 1 bis 4,
bei dem auf den Empfang der zweiten Messsteuerungsnachricht (310) hin alle gespeicherten Angaben der Mobilfunkzellen gelöscht oder geändert werden.

6. Verfahren gemäß einem der Ansprüche 1 bis 4,
bei dem auf den Empfang der zweiten Messsteuerungsnachricht (310) hin alle gespeicherten Angaben derjenigen Mobilfunkzellen, für die in der zweiten Messsteuerungsnachricht (310) eine Messanweisungs-Änderung angewiesen wurde, gelöscht oder geändert werden.

7. Verfahren gemäß einem der Ansprüche 1 bis 4,
• bei dem für die gespeicherten Angaben der Mobilfunkzellen überprüft wird, ob die dieser zugeordneten, gespeicherten Informationen unter Berücksichtigung der zweiten Messsteuerungsnachricht (310) noch gültig sind, und
• bei dem die gespeicherten Angaben derjenigen Mobilfunkzellen, für die die Informationen nicht mehr gültig sind, gelöscht oder geändert werden.

8. Verfahren gemäß einem der Ansprüche 1 bis 7,
bei dem das vorgegebene Kriterium für eine vorgegebene Zeitdauer erfüllt sein muss, bevor die Angabe der Mobilfunkzelle gespeichert wird.

9. Verfahren gemäß einem der Ansprüche 1 bis 8,
eingesetzt in einem Mobilfunk-Kommunikationsnetzwerk.

10. Verfahren gemäß einem der Ansprüche 1 bis 9,
eingesetzt in einem GSM-Mobilfunk-Kommunikationsnetzwerk oder in einem UMTS-Mobilfunk-Kommunikationsnetzwerk.

11. Mobilfunk-Kommunikationsendgerät (118),
• mit einem Empfänger zum Empfangen von
Messsteuerungsnachrichten (302, 310),
• mit einer Prüfeinheit, die derart eingerichtet ist, dass sie nach dem Empfang einer ersten Messsteuerungsnachricht (302) überprüft, ob für mindestens eine Mobilfunkzelle ein für das Erzeugen einer Messbericht-Nachricht (307, 309) vorgegebenes Kriterium gemäß der ersten Messsteuerungsnachricht (302) erfüllt ist, und dass sie für den Fall, dass das
• Kriterium für mindestens eine Mobilfunkzelle erfüllt ist, zumindest eine Angabe der Mobilfunkzelle speichert,
• mit einem Speicher zum Speichern der zumindest einen Angabe der Mobilfunkzelle,
• mit einer Verarbeitungseinheit, die derart eingerichtet ist, dass sie auf den Empfang einer zweiten Messsteuerungsnachricht (310) hin, mittels der für zumindest eine der Mobilfunkzellen eine Messanweisungs-Änderung angewiesen wird, zumindest eine der gespeicherten Angaben der Mobilfunkzellen löscht abhängig von der zweiten Messsteuerungsnachricht (310).

12. Mobilfunk-Kommunikationsendgerät (118) gemäß Anspruch 11, eingerichtet als GSM-Mobilfunk-Kommunikationsendgerät oder als UMTS-Mobilfunk-Kommunikationsendgerät.

## Claims

1. A method for processing measurement control messages (302, 310), carried out by a mobile radio communications terminal (118),
• in which after reception of a first measurement control message (302) it is checked whether a criterion which is predetermined for the generation of a measurement report message (307, 309), according to the first measurement control message (302), is satisfied for at least one mobile radio cell,
• in which in case the criterion is satisfied for at least one mobile radio cell at least one indication of the mobile radio cell is stored, and
• in which in response to the reception of a second measurement control message (310), by means of which a measurement instruction change is instructed for at least one of the mobile radio cells, at least one of the stored indications of the mobile radio cells is deleted or changed depending on the second measurement control message (310).

2. The method as claimed in claim 1,
in which in case the criterion is satisfied for at least one mobile radio cell, a measurement report message (307, 309) is generated and the mobile radio communications terminal (118) changes to a measurement message generation state for at least one mobile radio cell.

3. The method as claimed in claim 1 or 2,
in which the indication of the mobile radio cell is stored in a mobile radio cell triggered file.

4. The method as claimed in one of claims 1 to 3,
in which a plurality of indications of different mobile radio cells is stored in each case if a criterion which is predetermined for a respective mobile radio cell is satisfied for that respective mobile radio cell.

5. The method as claimed in one of claims 1 to 4,
in which in response to the reception of the second measurement control message (310) all the stored indications of the mobile radio cells are deleted or changed.

6. The method as claimed in one of claims 1 to 4,
in which in response to the reception of the second measurement control message (310) all of the stored indications of those mobile radio cells are deleted or changed for which a measurement instruction change has been instructed in the second measurement control message (310).

7. The method as claimed in one of claims 1 to 4,
• in which it is checked for the stored indications of the mobile radio cells whether the stored information associated with them is still valid taking into account the second measurement control message (310); and
• in which the stored indications of those mobile radio cells are deleted or changed for which the information is no longer valid.

8. The method as claimed in one of claims 1 to 7,
in which the predetermined criterion must be satisfied for a predetermined time period before storing the indication of the mobile radio cell.

9. The method as claimed in one of claims 1 to 8,
used in a mobile radio communications network.

10. The method as claimed in one of claims 1 to 9,
used in a GSM mobile radio communications network or in a UMTS mobile radio communications network.

11. A mobile radio communications terminal (118),
• with a receiver for receiving measurement control messages (302, 310),
• with a checking unit configured to, after reception of a first measurement control message (302), check whether a criterion, which is predetermined for production of a measurement report message (307, 309), according to the first measurement control message (302), is satisfied for at least one mobile radio cell and, in case the criterion is satisfied for at least one mobile radio cell, store at least one indication of the mobile radio cell,
• with a memory for storing the at least one statement of the mobile radio cell; and
• with a processing unit configured to, in response to the reception of a second measurement control message (310) by means of which a measurement instruction change is instructed for at least one of the mobile radio cells, delete at least one of the stored indications of the mobile radio cells, depending on the second measurement control message (310).

12. The mobile radio communications terminal (118) as claimed in claim 11, configured as a GSM mobile radio communications terminal or as a UMTS mobile radio communications terminal.

## Revendications

1. Procédé de traitement de messages (302, 310) de commande de mesure effectuée par un terminal (118) de communication de radiotéléphonie mobile,
• dans lequel on contrôle, après la réception d'un premier message (302) de commande de mesure, si, pour au moins une cellule mobile de radiotéléphonie, un critère, prescrit pour la production d'un message (307, 309) de relevé de mesure, est satisfait suivant le premier message (302) de commande de mesure,
• dans lequel, dans le cas où le critère est satisfait pour au moins une cellule mobile de radiotéléphonie, au moins une indication de la cellule mobile de radiotéléphonie est mémorisée,
• dans lequel, jusqu'à la réception d'un deuxième message (310) de commande de mesure, on affecte au moyen de la au moins une cellule mobile de radiotéléphonie, une modification d'affectation de mesure, on efface ou on modifié l'une des indications mémorisées des cellules mobiles de radiotéléphonie en fonction du deuxième message (310) de commande de mesure.

2. Procédé suivant la revendication 1,
dans lequel, dans le cas où le critère est satisfait pour au moins l'une des cellules mobiles de radiotéléphonie, on produit un message (307, 309) de relevé de mesure et en ce que le terminal (118) de communication de radiotéléphonie mobile passe dans un état de production de messages de mesure pour au moins l'une des cellules mobiles de radiotéléphonie.

3. Procédé suivant la revendication 1 ou 2, dans lequel l'indication de la cellule mobile de radiotéléphonie est mémorisée dans un fichier déclenché de cellules mobiles de radiotéléphonie.

4. Procédé suivant l'une des revendications 1 à 3, dans lequel plusieurs indications de cellules mobiles de radiotéléphonie différentes sont mémorisées, respectivement pour le cas ou pour l'une des cellules mobiles de radiotéléphonie respective, un critère prescrit pour celle-ci est satisfait.

5. Procédé suivant l'une des revendications 1 à 4, dans lequel jusqu'à la réception du deuxième message (310) de commande de mesure, toutes les indications mémorisées des cellules mobiles de radiotéléphonie sont effacées ou modifiées.

6. Procédé suivant l'une des revendications 1 à 4, dans lequel jusqu'à la réception du deuxième message (310) de commande de mesure, toutes les indications mémorisées des cellules mobiles de radiotéléphonie, pour lesquelles il a été indiqué dans le deuxième message (310) de commande de mesure une modification de l'affectation de mesure, sont effacées ou modifiées.

7. Procédé suivant l'une des revendications 1 9,
• dans lequel on contrôle pour les indications mémorisées des cellules mobiles de radiotéléphonie, si les informations mémorisées et associées à celles-ci sont encore valables en prenant en considération le deuxième message (310) de commande de mesure, et
• dans lequel, les indications mémorisées des cellules mobiles de radiotéléphonie, pour lesquelles les informations ne sont plus valables, sont effacées ou modifiées.

8. Procédé suivant l'une des revendications 1 à 7,
dans lequel le critère prescrit doit être satisfait pendant une durée prescrite avant que l'indication de la cellule mobile de radiotéléphonie soit mémorisée.

9. Procédé suivant l'une des revendications 1 à 8, utilisé dans un réseau de communication de radiotéléphonie mobile.

10. Procédé suivant l'une des revendications 1 à 9, utilisé dans un réseau de communication de radiotéléphonie mobile GSM ou dans un réseau de communication de radiotéléphonie mobile UMTS.

11. Terminal (118) de communication de radiotéléphonie mobile,
• comprenant un récepteur de réception de messages (302, 310),
• comprenant une unité de contrôle, qui est telle qu'elle contrôle, après la réception d'un premier message (302) de commande de mesure, si, pour au moins une cellule mobile de radiotéléphonie, un critère prescrit pour la production d'un message (307, 309) de relevé de mesure est satisfait suivant le premier message (302) de commande de mesure et en ce que, dans le cas où le critère est satisfait pour au moins une cellule mobile de radiotéléphonie, elle mémorise au moins une indication de la cellule mobile de radiotéléphonie,
• comprenant une mémoire pour mémoriser la au moins une indication de la cellule mobile de radiotéléphonie,
• comprenant une unité de traitement, qui est telle que jusqu'à la réception d'un deuxième message (310) de commande de mesure, il est indiqué, au moyen de la au moins une des cellules mobiles de radiotéléphonie, une modification de l'affectation de mesure, au moins l'une des indications mémorisées des cellules mobiles de radiotéléphonie s'efface en fonction du deuxième message (310) de commande de mesure.

12. Terminal (118) de communication de radiotéléphonie mobile suivant la revendication 11, conçu comme terminal de communication de radiotéléphonie mobile GSM et comme terminal de communication de radiotéléphonie mobile UMTS.
